# EUROPÄISCHE PATENTANMELDUNG

(11) **EP 1 630 341 A1**
(43) Veröffentlichungstag der Anmeldung: **01.03.2006**
(21) Anmeldenummer: 05014164.7
(22) Anmeldetag: 30.06.2005
(51) Int. Cl.: E05F 11/48

(54) **Fensterheberschiene**

(30) Priorität: 17.08.2004 DE 102004039851
(71) Anmelder: ArvinMeritor GmbH, 63128 Dietzenbach (DE)
(72) Erfinder: Heyer, Thomas, 38524 Sassenburg (DE); Waroch, Markus, 38550 Isenbüttel (DE)
(74) Vertreter: Sties, Jochen

(57) **Zusammenfassung**

Eine Fensterheberschiene weist eine Seilscheibe (16) und eine Seilscheibenabdeckung (28) auf, wobei die Seilscheibenabdeckung (28) in verschiedenen Stellungen an der Fensterheberschiene (18) befestigt werden kann, um dadurch eine flexibler einsetzbare Baugruppe zu gewährleisten und die Herstell- und Montagekosten zu verringern.

## Beschreibung

Die Erfindung betrifft eine Fensterheberschiene mit einer Seilscheibe und einer Seilscheibenabdeckung.

Derartige Fensterheberschienen sind Teil von Seilzugfensterhebern zum Anheben und Absenken von Fahrzeugfensterscheiben. Bekannt sind Seilzugfensterheber, bei denen ein Zugmittel um eine Seiltrommel und mehrere Seilscheiben gewickelt ist. Dabei sind die Seilscheiben auf einer Fensterheberschiene angeordnet, und das Zugmittel ist mit einem Mitnehmer verbunden. Durch Drehen der Seiltrommel hebt und senkt sich der Mitnehmer und bewegt die Fensterscheibe in die gewünschte Stellung.

Bei bekannten Fensterheberschienen wird durch die Verwendung eines starren Widerlagers die Umlenkung des Zugmittels im Bereich der Seilscheiben nur durch Anpassen der gesamten Baugruppe an die jeweilige Einsatzbedingung erreicht. Da sich der erforderliche Umlenkwinkel des Zugmittels zur Kraftübertragung je nach Fahrzeugtyp und sogar innerhalb eines Fahrzeugtyps je nach Fensterart ändert, führt dies zu erheblichen Mehrkosten.

Aufgabe der Erfindung ist es daher, eine flexibler einsetzbare Baugruppe zur Anwendung in Fensterhebern bereitzustellen, um den Arbeitsaufwand bei der Herstellung und dadurch die Mehrkosten zu senken.

Diese Probleme werden bei der eingangs genannten Fensterheberschiene dadurch gelöst, daß die Seilscheibenabdeckung in verschiedenen Stellungen an der Fensterheberschiene befestigt werden kann. Die mit der Erfindung erzielten Vorteile bestehen insbesondere darin, daß die Fensterheberschiene flexibel an die jeweiligen Einsatzbedingungen angepaßt werden kann. Dabei ist vor allem vorteilhaft, daß Seilscheibe und Seilscheibenabdeckung erst vor Ort an den bestimmten Fahrzeugtyp angepaßt werden können, die Herstellung dieser Bauteile unabhängig vom Fahrzeugtyp ist und automatisiert werden kann. Dadurch werden die Herstellkosten verringert.

Eine kompakte Baugruppe wird bei einer Ausführungsform bereitgestellt, bei der die Fensterheberschiene einteilig ausgebildet ist und die Seilscheibe und die Seilscheibenabdeckung direkt an der Fensterheberschiene befestigt sind.

Vorzugsweise ist an der Fensterheberschiene eine Befestigungsplatte angebracht, an der die Seilscheibe und die Seilscheibenabdeckung befestigt sind. Dadurch ist eine Vormontage der Seilscheibe und der Seilscheibenabdeckung an der Befestigungsplatte möglich, und die vormontierte Einheit kann später an dem Kraftfahrzeug befestigt werden.

Ferner ist die Seilscheibenabdeckung bevorzugt mittels Haken befestigt oder vorfixiert. Haken sind allgemein als wirksame Befestigungselemente bekannt, die ein schnelles und sicheres Einrasten in die Fensterheberschiene gewährleisten und dabei gleichermaßen schnell gelöst werden können. Darüber hinaus sind die Herstellkosten solcher Verbindungen gering.

Vorzugsweise ist bei Zugmitteln, die als Bowdenzug ausgeführt sind, ein notwendiges Widerlager für den Mantel unmittelbar in die Seilscheibenabdeckung integriert, wodurch gewährleistet werden kann, daß das Zugmittel in den zugehörigen Nuten der Seilscheiben bleibt, insbesondere bei der Montage an dem Kraftfahrzeug. Ein Schlitz, der in dem Widerlager angebracht ist, dient dabei zur Aufnahme des Zugmittels.

Weitere Merkmale und Vorteile der Erfindung ergeben sich aus der nachfolgenden Beschreibung der bevorzugten Ausführungsform und aus den beigefügten Zeichnungen, auf die Bezug genommen wird. In den Zeichnungen zeigen:
- Figur 1 eine schematische Darstellung eines Seilzugfensterhebers nach dem Stand der Technik;
- Figur 2 eine perspektivische Teilansicht der Vorderseite einer Fensterheberschiene gemäß der vorliegenden Erfindung; und
- Figur 3 eine Teilansicht der Rückseite der Fensterheberschiene gemäß der vorliegenden Erfindung.

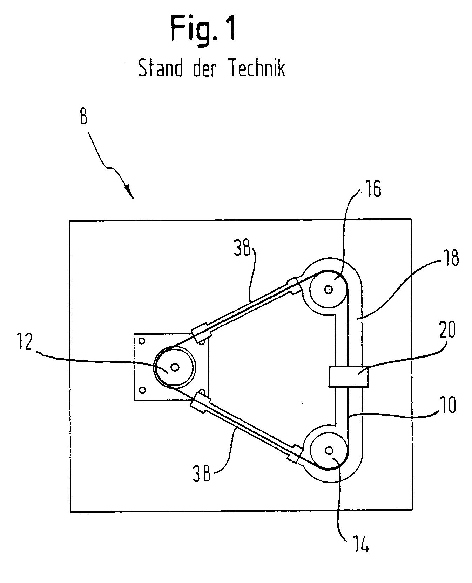

Figur 1 zeigt schematisch den an sich bekannten Aufbau eines Seilzugfensterhebers 8. Ein Zugmittel 10 ist um eine Seiltrommel 12 gewickelt und durch diese an einen Seilantrieb (nicht gezeigt) gekoppelt. Das Zugmittel 10 wird in einer geschlossenen Schleife über eine untere Seilscheibe 14 und eine obere Seilscheibe 16 geführt. Die beiden Seilscheiben 14, 16 sind an einer Fensterheberschiene 18 befestigt, und das Zugmittel 10 ist gegebenenfalls an den Zwischenstrecken 38 zwischen den Seilscheiben 14, 16 und der Seiltrommel 12 ummantelt. Ein Mitnehmer 20 ist einerseits mit dem Zugmittel 10 und andererseits mit einer Fensterscheibe (nicht gezeigt) verbunden, so daß diese durch Drehen der Seiltrommel 12 nach oben bzw. nach unten in die gewünschte Stellung bewegt werden kann. Die genaue Funktion eines Seilzugfensterhebers 8 wird hier nicht besprochen, da sie aus dem Stand der Technik bekannt ist und die Erfindung nur die Umlenkung des Zugmittels 10 im Bereich der Seilscheiben 14, 16 betrifft.

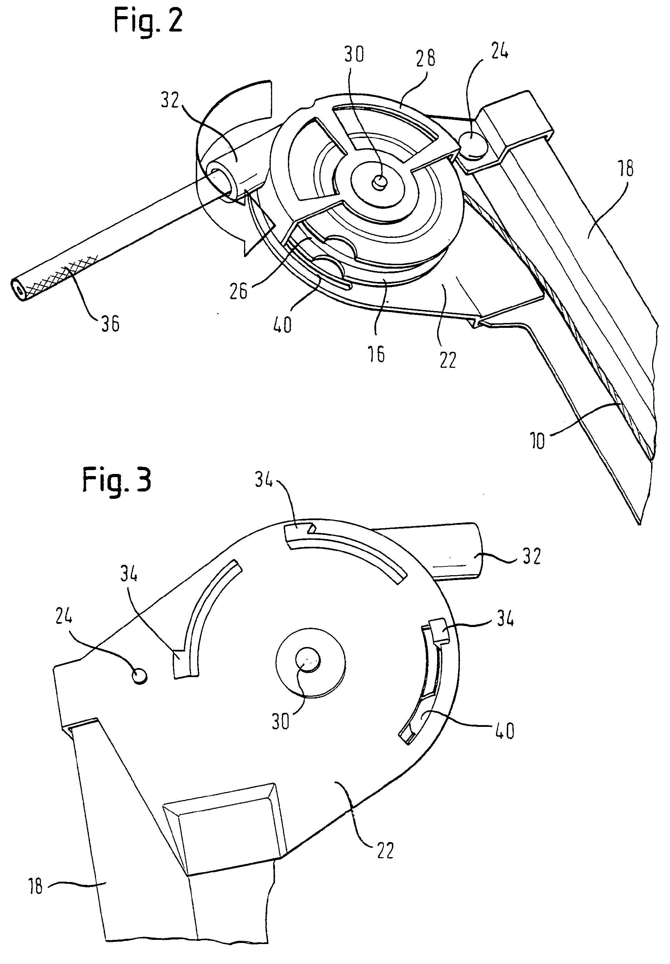

Figur 2 zeigt einen Teil der Fensterheberschiene 18 mit der oberen Seilscheibe 16. Die untere Seilscheibe 14 ist auf die gleiche Art und Weise ausgeführt.

An der Fensterheberschiene 18 ist eine Befestigungsplatte 22 angebracht. Die Fensterheberschiene 18 ist in eine Tasche an der Befestigungsplatte 22 eingesteckt und mit der Befestigungsplatte durch ein Verbindungselement 24 verbunden, wobei das Verbindungselement 24 vorzugsweise ein Niet oder eine Schraube ist.

Die Seilscheibe 16 weist eine Umfangsnut 26 auf, die das Zugmittel 10 führen kann. Eine Seilscheibenabdeckung 28 ist über der Seilscheibe 16 angeordnet und bedeckt diese teilweise. Die Seilscheibe 16 und die Seilscheibenabdeckung 28 sind gemeinsam mittels eines zweiten Verbindungselements 30, z.B. einer Schraube oder einem Niet, an der Befestigungsplatte 22 befestigt, wobei die Seilscheibe 16 drehbar gelagert ist und die Seilscheibenabdeckung 28 zusätzlich mittels Haken 34 (Figur 3) unbeweglich an der Befestigungsplatte 22 angebracht ist.

Die Seilscheibenabdeckung 28 weist an ihrem einen Ende ein Widerlager 32 auf. Das Zugmittel 10 weist eine Ummantelung 36 an den Zwischenstrecken 38 (Figur 1) des Zugmittels 10 auf. An dem Widerlager 32 liegen die Enden der Ummantelung 36 an, da das Zugmittel 10 vorzugsweise als Bowdenzug ausgebildet ist. Da die Verwendung eines Bowdenzugs in diesem Bereich bekannt ist, wird hier nicht näher darauf eingegangen.

Das Zugmittel 10 wird parallel zur Fensterheberschiene 18 und im weiteren Verlauf in der Umfangsnut 26 der Seilscheibe 16 geführt. Am Widerlager 32 gelangt das Zugmittel 10 aus der Seilscheibe 16 und der Seilscheibenabdeckung 28 in die gewünschte Richtung.

Bei der Betätigung des Seilantriebs (nicht gezeigt) wird das Zugmittel 10 je nach Bewegungsrichtung der Fensterscheibe (nicht gezeigt) im oder gegen den Uhrzeigersinn bewegt; dabei kann die Reibung des Zugmittels 10 an der Seilscheibe 16 nahezu vernachlässigt werden, da diese drehbar gelagert ist.

Figur 3 zeigt die Rückseite der Fensterheberschiene 18. Die Seilscheibenabdeckung 28 ist mittels Haken 34 an der Befestigungsplatte 22 befestigt. Diese Haken 34 greifen in ringförmige Rillen 40 ein, die abschnittsweise an der Befestigungsplatte 22 angeordnet sind.

Die Seilscheibenabdeckung wird in der folgenden Weise montiert: Zuerst wird sie mittels der Haken 34 an der Befestigungsplatte vormontiert. Dabei kann die Seilscheibenabdeckung in verschiedenen Stellungen angeordnet (siehe Pfeil in Figur 2) werden, ohne daß ein Werkzeugs erforderlich ist. Wenn die Seilscheibenabdeckung im gewünschten Winkel angeordnet ist, wird sie mittels des zweiten Verbindungselements 30 in der jeweiligen Position befestigt. Auf diese Weise kann der gewünschte Umlenkwinkel des Zugmittels 10 (bei dieser Ausführungsform zwischen 45° und 90°) eingestellt werden. Dadurch können die Umlenkwinkel, die je nach Fahrzeugtyp verschieden sind, verändert werden, ohne die Einzelbauteile der Fensterheberschiene in aufwendiger Weise neu herzustellen.

### Bezugszeichenliste

- 8: Seilzugfensterheber
- 10: Zugmittel
- 12: Seiltrommel
- 14: untere Seilscheibe
- 16: obere Seilscheibe
- 18: Fensterheberschiene
- 20: Mitnehmer
- 22: Befestigungsplatte
- 24: Verbindungselement
- 26: Umfangsnut
- 28: Seilscheibenabdeckung
- 30: Verbindungselement
- 32: Widerlager
- 34: Haken
- 36: Ummantelung
- 38: Zwischenstrecken
- 40: Rille

## Patentansprüche

1. Fensterheberschiene mit einer Seilscheibe (16) und einer Seilscheibenabdeckung (28), **dadurch gekennzeichnet, daß** die Seilscheibenabdeckung (28) in verschiedenen Stellungen an der Fensterheberschiene (18) befestigt werden kann.

2. Fensterheberschiene nach Anspruch 1, **dadurch gekennzeichnet, daß** die Fensterheberschiene (18) einteilig ausgebildet ist und die Fensterheberschiene (18) als Befestigungsplatte (22) für die Seilscheibe (16) und die Seilscheibenabdeckung (28) dient.

3. Fensterheberschiene nach Anspruch 1 oder 2, **dadurch gekennzeichnet, daß** an der Fensterheberschiene (18) eine Befestigungsplatte (22) angebracht ist, an der die Seilscheibe (16) und die Seilscheibenabdeckung (28) befestigt sind.

4. Fensterheberschiene nach einem der vorhergehenden Ansprüchen, **dadurch gekennzeichnet, daß** die Seilscheibenabdeckung (28) mittels Haken (34) befestigt ist.

5. Fensterheberschiene nach einem der vorhergehenden Ansprüche, **dadurch gekennzeichnet, daß** die Seilscheibe (16) drehbar gelagert ist.

6. Fensterheberschiene nach einem der vorhergehenden Ansprüche, **dadurch gekennzeichnet, daß** die Seilscheibenabdeckung (28) ein Widerlager (32) aufweist, an dem eine Ummantelung (36) eines Zugmittels (10) anliegt.
